# EUROPÄISCHE PATENTANMELDUNG

(11) **EP 3 327 912 A1**
(43) Veröffentlichungstag der Anmeldung: **30.05.2018**
(21) Anmeldenummer: 16200539.1
(22) Anmeldetag: 24.11.2016
(51) Int. Cl.: H02M 1/12, H02J 3/01, H02M 7/537, H02M 7/483

(54) **HYSTERESEREGELUNG EINES AUSGANGSSTROMS EINES STROMRICHTERS**

(71) Anmelder: Siemens Aktiengesellschaft, 80333 München (DE)
(72) Erfinder: Benesch, Norbert, 90562 Heroldsberg (DE); Dreßel, Bernd, 96138 Burgebrach (DE); Schmitt, Maximilian, 97483 Eltmann (DE); Wießmann, Harald, 91058 Erlangen (DE)

(57) **Zusammenfassung**

Die Erfindung betrifft ein Verfahren zur Regelung eines Ausgangsstroms (i, iᵤ, iᵥ, i_{w}) eines Stromrichters (1), der einen Gleichspannungszwischenkreis (Z) und Halbleiterschalter (17) in einer Brückenschaltung zur Umrichtung einer Gleichspannung (U_{Z}) des Gleichspannungszwischenkreises (Z) aufweist. Der Ausgangsstrom (i, i_{U}, iᵥ, i_{w}) wird mit einer direkten Hysteresestromregelung geregelt, bei der ein Istwert (iᵢₛₜ) des Ausgangsstroms (i, iᵤ, iᵥ, i_{w}) innerhalb eines Hysteresefensters um einen Sollwert (iₛₒₗₗ) gehalten wird. Ferner wird eine Hysteresebreite (W) des Hysteresefensters moduliert, um ein Frequenzspektrum des Ausgangsstroms (i, iᵤ, iᵥ, i_{W}) einzustellen.

## Beschreibung

Die Erfindung betrifft eine Regelung eines Ausgangsstroms eines Stromrichters, der einen Gleichspannungszwischenkreis und Halbleiterschalter in einer Brückenschaltung zur Umrichtung einer Gleichspannung des Gleichspannungszwischenkreises aufweist.

Zur Regelung eines Ausgangsstromes eines derartigen Stromrichters können zwei verschiedene Verfahren angewendet werden. Am häufigsten wird eine so genannte indirekte Stromregelung eingesetzt. Dabei wird mit einem Stromregler eine Ausgangsspannung berechnet, die dann mit einem Pulsweitenmodulationsverfahren erzeugt wird. Alternativ wird eine so genannte direkte Stromregelung eingesetzt. Dabei wird direkt durch Auswerten des Iststromes der nächste Ausgangszustand des Stromrichters bestimmt, d. h. das Pulsmuster der Stromregelung wird direkt aus einem Stromfehler abgeleitet.

Der Erfindung liegt die Aufgabe zugrunde, ein verbessertes Verfahren zur Regelung eines Ausgangsstroms eines Stromrichters und einen Stromrichter, der die Anwendung des Verfahrens ermöglicht, anzugeben.

Die Aufgabe wird erfindungsgemäß hinsichtlich des Verfahrens durch die Merkmale des Anspruchs 1 und hinsichtlich des Stromrichters durch die Merkmale des Anspruchs 8 gelöst.

Vorteilhafte Ausgestaltungen der Erfindung sind Gegenstand der Unteransprüche.

Bei einem erfindungsgemäßen Verfahren zur Regelung eines Ausgangsstroms eines Stromrichters, der einen Gleichspannungszwischenkreis und Halbleiterschalter in einer Brückenschaltung zur Umrichtung einer Gleichspannung des Gleichspannungszwischenkreises aufweist, wird der Ausgangsstrom mit einer direkten Hysteresestromregelung geregelt, bei der ein Istwert des Ausgangsstroms innerhalb eines Hysteresefensters um einen Sollwert gehalten wird. Dabei wird eine Hysteresebreite des Hysteresefensters moduliert, um ein Frequenzspektrum des Ausgangsstroms einzustellen.

Unter einer Hystereseregelung wird eine Regelung verstanden, bei der die Regelgröße in einem Toleranzbereich um einen Sollwert gehalten wird. Der Toleranzbereich wird hier als Hysteresefenster bezeichnet, eine Breite des Toleranzbereichs wird als Hysteresebreite bezeichnet.

Die Erfindung kombiniert eine direkte Hysteresestromregelung eines Ausgangsstroms eines Stromrichters mit einer Modulation der Hysteresebreite. Verglichen mit einer auf Pulsweitenmodulation basierenden indirekten Stromregelung ermöglicht eine direkte Stromregelung vorteilhaft eine höhere Dynamik und Robustheit, beispielsweise gegenüber Änderungen von Parametern der Regelstrecke, da bei einer auf Pulsweitenmodulation basierenden indirekten Stromregelung die innerhalb der Pulsperioden verwendeten Pulsmuster der Pulsweitenmodulation vorausberechnet werden müssen. Die Erfindung nutzt aus, dass die Schaltfrequenz eines Stromrichters bei der Verwendung einer direkten Hysteresestromregelung des Ausgangsstroms durch die Veränderung einer Hysteresebreite der Hysteresestromregelung beeinflusst werden kann. Durch die Beeinflussung der Schaltfrequenz kann wiederum das Frequenzspektrum des Ausgangsstroms geändert werden. Dies ermöglicht, ein Frequenzspektrum des Ausgangsstroms durch eine Modulation der Hysteresebreite der direkten Hysteresestromregelung einzustellen. Beispielsweise kann dadurch vorteilhaft die Anregung von Resonanzfrequenzen in dem Gesamtsystem aus dem Stromrichter und einer Last reduziert bzw. vermieden werden. Ferner können unerwünschte Oberschwingungsanteile des Ausgangsstroms gezielt in Frequenzbereiche verschoben werden, in denen sie durch das System stärker gedämpft werden oder in denen sie unkritisch sind. Wenn der Stromrichter mit einer Last verbunden ist, die beispielsweise ein Motor oder eine Induktivität ist, können außerdem störende Geräusche, die häufig von einer derartigen Last erzeugt werden, unterdrückt werden, indem das Frequenzspektrum dem akustischen Empfinden des menschlichen Gehörs angepasst wird.

Eine Ausgestaltung der Erfindung sieht vor, dass die Modulation der Hysteresebreite für verschiedene Betriebspunkte des Stromrichters vorausberechnet wird und im laufenden Betrieb des Stromrichters betriebspunktabhängig gemäß der Vorausberechnung eingestellt wird. Diese Ausgestaltung der Erfindung ermöglicht eine betriebspunktabhängige Modulation der Hysteresebreite mit einem geringen Rechenaufwand im Betrieb des Stromrichters, da die Modulation der Hysteresebreite vorausberechnet wird.

Eine zur vorgenannten Ausgestaltung alternative Ausgestaltung der Erfindung sieht vor, dass die Modulation der Hysteresebreite im laufenden Betrieb des Stromrichters in Abhängigkeit von einem momentanen Betriebspunkt des Stromrichters berechnet wird. Diese Ausgestaltung der Erfindung erfordert zwar einen höheren Rechenaufwand im Betrieb des Stromrichters zur Modulation der Hysteresebreite, ermöglicht jedoch eine flexiblere Anpassung der Modulation der Hysteresebreite auch an Betriebspunkte, die nicht vorhergesehen und daher nicht vorausberechnet wurden.

Eine zu den beiden vorgenannten Ausgestaltungen alternative Ausgestaltung der Erfindung sieht vor, dass die Hysteresebreite im laufenden Betrieb des Stromrichters geregelt wird. Diese Ausgestaltung der Erfindung ermöglicht eine gewünschte Modulation der Hysteresebreite auch ohne genaue Kenntnis des aktuellen Betriebspunktes des Stromrichters und dessen Parameter.

Eine weitere Ausgestaltung der Erfindung bezieht sich auf einen mit einem Netzfilter verbundenen Stromrichter. Diese Ausgestaltung der Erfindung sieht vor, dass die Hysteresebreite in Abhängigkeit von einem Amplitudengang des Netzfilters moduliert wird. Beispielsweise wird die Hysteresebreite derart moduliert, dass ein Oberschwingungsanteil des Ausgangsstroms von einem ersten Frequenzbereich in einen zweiten Frequenzbereich, in dem das Netzfilter eine höhere Dämpfung als in dem ersten Frequenzbereich aufweist, verschoben wird. Diese Ausgestaltung der Erfindung ermöglicht vorteilhaft eine Anpassung des Frequenzspektrums des Ausgangsstroms an einen Netzfilter und dessen Amplitudengang. Beispielsweise können neue Stromrichtervarianten optimal an bestehende Netzfilter angepasst werden, so dass bereits verfügbare Netzfilter weiter genutzt werden können. Ferner können Netzrückwirkungen eines Gesamtsystems aus bereits bestehenden Stromrichtern und Netzfiltern minimiert werden. Außerdem kann das Frequenzspektrum eines Stromrichters und eines Netzfilters als Einheit optimiert werden. Dies erhöht vorteilhaft die Optimierungsmöglichkeiten beim Entwurf des Netzfilters. Auch kann ein herkömmlicher Stromrichter vorteilhaft durch einen Stromrichter mit einer direkten Hysteresestromregelung unter Beibehaltung eines vorhandenen Netzfilters ersetzt werden.

Eine weitere Ausgestaltung der Erfindung sieht vor, dass als Hysteresestromregelung eine so genannte SDHC-Stromregelung verwendet wird. Unter einer SDHC-Stromregelung (SDHC = Switched Diamond Hysteresis Control) wird ein Stromregelungsverfahren verstanden, das in H. Wießmann, Hochdynamisches direktes Stromregelverfahren für Pulswechselrichter im Vergleich zu PWM-Verfahren, ISBN 978-3843904759, Verlag Dr. Hut 2012 veröffentlicht wurde. Bei einem SDHC-Verfahren werden zur Stromregelung eines Stromrichters zu jedem Zeitpunkt vier benachbarte Raumzeiger verwendet, deren Spitzen eine Raute bilden. Das SDHC-Verfahren verbindet vorteilhaft die hohe Dynamik und Robustheit einer direkten Hysteresestromregelung mit dem hervorragenden stationären Verhalten eines raumzeigermodulierten Umrichters.

Ein erfindungsgemäßer Stromrichter weist einen Gleichspannungszwischenkreis, Halbleiterschalter, einen Hystereseregler und eine Modulationseinheit auf. Der Gleichspannungszwischenkreis weist eine Hochpotentialschiene und eine Niederpotentialschiene auf, zwischen denen eine Gleichspannung anliegt. Die Halbleiterschalter sind in einer Brückenschaltung zwischen die Hochpotentialschiene und die Niederpotentialschiene zur Umrichtung der Gleichspannung geschaltet. Der Hystereseregler ist zur direkten Hysteresestromregelung eines Ausgangsstroms des Stromrichters ausgebildet, bei der ein Istwert des Ausgangsstroms innerhalb eines Hysteresefensters um einen Sollwert gehalten wird. Die Modulationseinheit ist zur Modulation einer Hysteresebreite des Hysteresefensters ausgebildet. Ein derartiger Stromrichter ermöglicht die Stromregelung gemäß dem erfindungsgemäßen Verfahren. Die Vorteile des Stromrichters ergeben sich daher aus den oben genannten Vorteilen des erfindungsgemäßen Verfahrens.

Ausgestaltungen des Stromrichters sehen vor, dass die Brückenschaltung eine Zwei-Level-Topologie oder eine Multi-Level-Topologie aufweist, und/oder dass der Stromrichter als ein einphasiger oder mehrphasiger Wechselrichter oder als ein Gleichspannungswandler ausgebildet ist. Diese Ausgestaltungen ermöglichen die Anwendung des erfindungsgemäßen Verfahrens für verschiedene Arten von Stromrichtern.

Eine weitere Ausgestaltung des Stromrichters sieht vor, dass die Modulationseinheit eine Steuereinheit zur Speicherung vorausberechneter betriebspunktabhängiger Modulationsmuster zur Modulation der Hysteresebreite und zur Steuerung der Hysteresebreite im laufenden Betrieb des Stromrichters gemäß einem vorausberechneten betriebspunktabhängigen Modulationsmuster aufweist.

Eine zur vorgenannten Ausgestaltung alternative Ausgestaltung des Stromrichters sieht vor, dass die Modulationseinheit eine Steuereinheit zur Berechnung der Modulation der Hysteresebreite in Abhängigkeit von einem momentanen Betriebspunkt des Stromrichters im laufenden Betrieb und zur Steuerung der Hysteresebreite gemäß der berechneten Modulation aufweist.

Eine zu den beiden vorgenannten Ausgestaltungen alternative Ausgestaltung des Stromrichters sieht vor, dass die Modulationseinheit eine Regelungseinheit zur Regelung der Hysteresebreite aufweist.

Die vorgenannten zueinander alternativen Ausgestaltungen des Stromrichters entsprechen oben bereits genannten Ausgestaltungen des erfindungsgemäßen Verfahrens mit den dort bereits genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Ersatzschaltbild eines ersten Ausführungsbei spiels eines Stromrichters,
- FIG 2: erste Verläufe eines Ausgangsstroms und einer Schaltfrequenz eines Stromrichters,
- FIG 3: zweite Verläufe eines Ausgangsstroms und einer Schaltfrequenz eines Stromrichters,
- FIG 4: ein erstes Amplitudenspektrum eines Ausgangsstroms eines Stromrichters,
- FIG 5: dritte Verläufe eines Ausgangsstroms und einer Schaltfrequenz eines Stromrichters,
- FIG 6: ein zweites Amplitudenspektrum eines Ausgangsstroms eines Stromrichters,
- FIG 7: einen vierten Verlauf eines Ausgangsstroms eines Stromrichters,
- FIG 8: ein drittes Amplitudenspektrum eines Ausgangsstroms eines Stromrichters,
- FIG 9: ein Ersatzschaltbild eines zweiten Ausführungsbeispiels eines Stromrichters,
- FIG 10: einen Schaltplan des zweiten Ausführungsbeispiels eines Stromrichters,
- FIG 11: ein Blockschaltbild eines aus einem Stromrichter, einem Netzfilter und einem Netz bestehenden Systems, und
- FIG 12: Amplitudengänge eines Netzfilters.

Einander entsprechende Teile sind in allen Figuren mit den gleichen Bezugszeichen versehen.

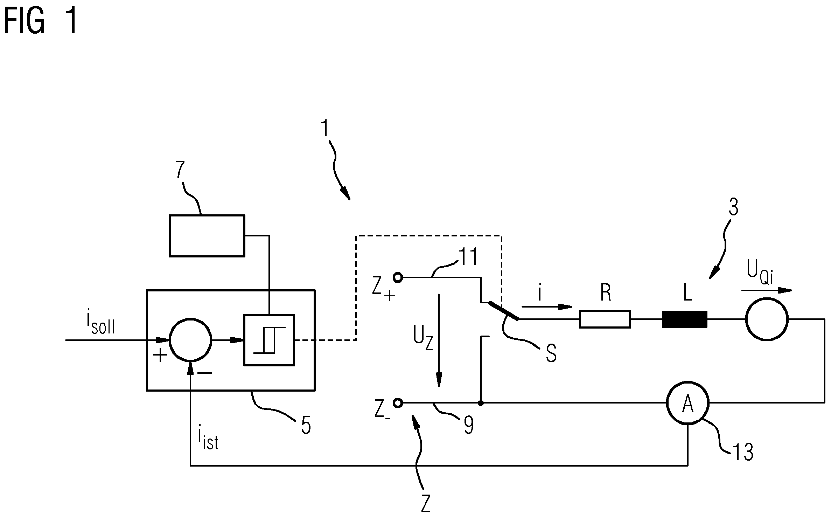

Figur 1 zeigt ein Ersatzschaltbild eines ersten Ausführungsbeispiels eines Stromrichters 1, an den eine Last 3 angeschlossen ist. Der Stromrichter 1 weist einen Gleichspannungszwischenkreis Z, einen Schalter S, einen Hystereseregler 5 und eine Modulationseinheit 7 auf.

Der Gleichspannungszwischenkreis Z weist eine Niederpotentialschiene 9, die auf einem Niederpotential Z₋ liegt, und eine Hochpotentialschiene 11, die auf einem Hochpotential Z₊ liegt, auf. Der Gleichspannungszwischenkreis Z stellt eine Gleichspannung U_{z}, die die Differenz des Hochpotentials Z₊ und des Niederpotentials Z- ist, bereit.

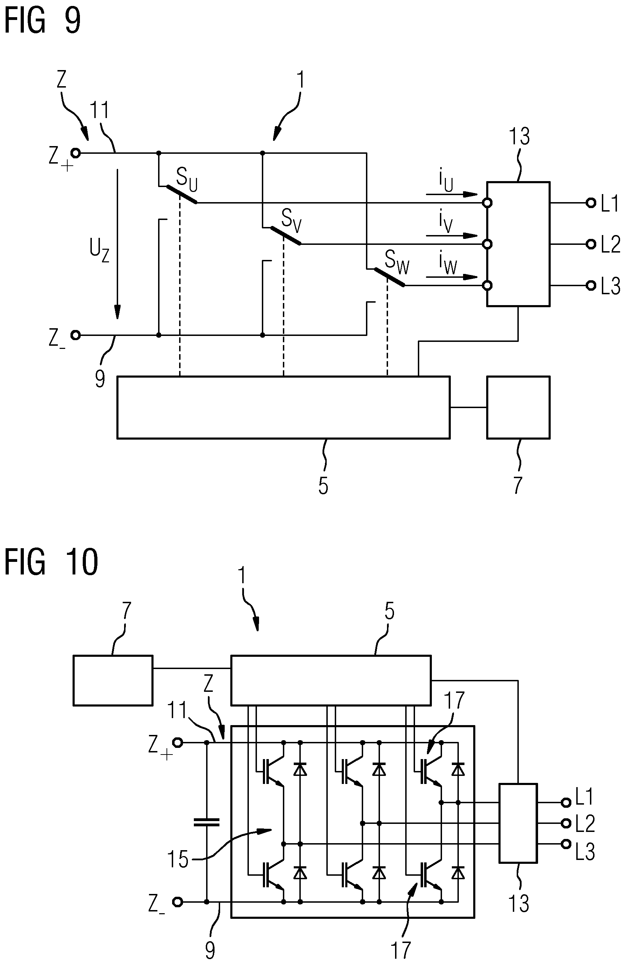

Der Schalter S weist einen ersten Schaltzustand, der einen Ausgang des Schalter S auf das Hochpotential Z₊ legt, und einen zweiten Schaltzustand, der den Ausgang des Schalters S auf das Niederpotential Z- legt, auf. Der Schalter S wird beispielsweise analog zu Figur 10 durch zwei zu einer Halbbrücke 15 verschaltete Halbleiterschalter 17 realisiert.

Die Last 3 ist in dem Ersatzschaltbild als ein ohmscher Widerstand R und eine Induktivität L mit einer Gegenspannung U_{Qi} dargestellt.

Mit dem Hystereseregler 5 wird ein Ausgangsstrom i des Stromrichters 1 durch eine direkte Hysteresestromregelung geregelt, so dass ein Istwert iᵢₛₜ des Ausgangsstroms i innerhalb eines Hysteresefensters um einen Sollwert iₛₒₗₗ gehalten wird. Der Istwert iᵢₛₜ des Ausgangsstroms i wird durch eine Strommessvorrichtung 13 erfasst und dem Hystereseregler 5 zugeführt. Der Hystereseregler 5 steuert den Schalter S an, so dass der Istwert iᵢₛₜ des Ausgangsstroms i in das Hysteresefenster zurückgeführt wird, wenn er es verlässt.

Mit der Modulationseinheit 7 wird eine Hysteresebreite W des Hysteresefensters moduliert, um ein Frequenzspektrum des Ausgangsstroms i einzustellen.

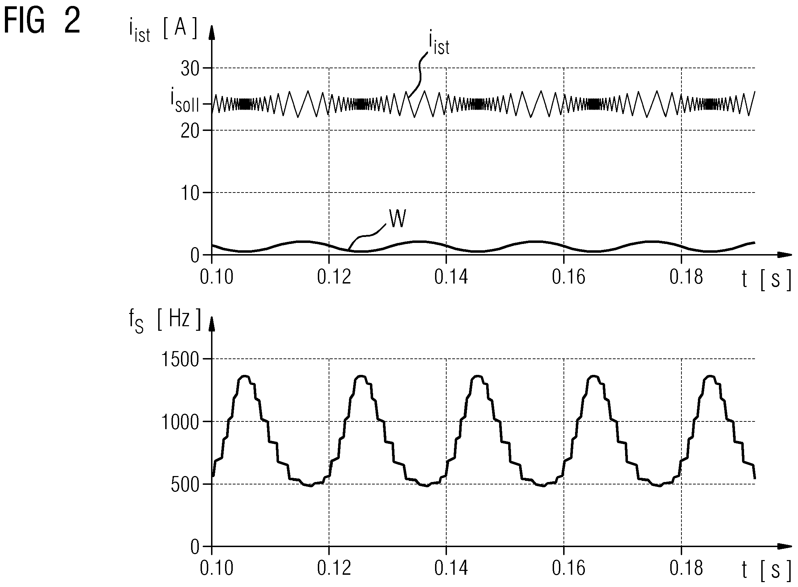

Figur 2 zeigt erste Verläufe eines Istwertes iᵢₛₜ des Ausgangsstroms i des in Figur 1 dargestellten Stromrichters 1 und einer Schaltfrequenz fₛ des Schalters S in Abhängigkeit von einer Zeit t für eine konstante Gegenspannung U_{Qi} und einen konstanten Sollwert iₛₒₗₗ des Ausgangsstroms i von 25 A, wobei die Hysteresebreite W des Hysteresefensters sinusförmig moduliert wird. Das Hysteresefenster liegt symmetrisch um den Sollwert iₛₒₗₗ und die Hysteresebreite W ist hier als ein Abstand der oberen Grenze des Hysteresefensters von dem Sollwert iₛₒₗₗ definiert, so dass das Hysteresefenster doppelt so breit wie die Hysteresebreite W ist. Die Schaltfrequenz fₛ ändert sich entsprechend der Modulation der Hysteresebreite W, wobei die Schaltfrequenz fₛ nichtlinear von der Hysteresebreite W abhängt. Ohne die Modulation der Hysteresebreite W würde sich nach einem Einschwingvorgang eine feste stationäre Schaltfrequenz fₛ einstellen.

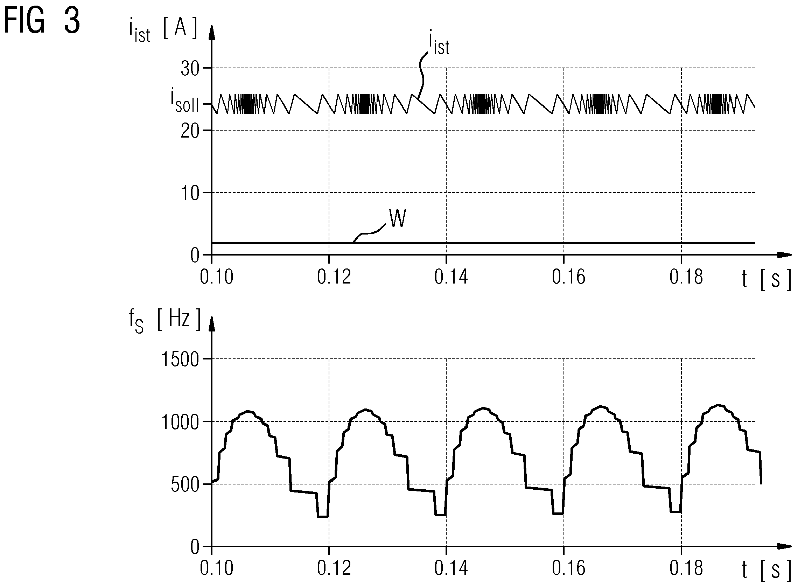

Figur 3 zeigt zweite zeitliche Verläufe eines Istwertes iᵢₛₜ des Ausgangsstroms i des in Figur 1 dargestellten Stromrichters 1 und der Schaltfrequenz fₛ des Schalters S für eine sinusförmige Gegenspannung U_{Qi} mit einer Frequenz von 50 Hz und einen konstanten Sollwert iₛₒₗₗ des Ausgangsstroms i von 25 A, wobei die Hysteresebreite W des Hysteresefensters nicht moduliert wird. Die zeitliche Änderung der Gegenspannung U_{Qi} bewirkt eine entsprechende zeitliche Änderung der Schaltfrequenz fₛ.

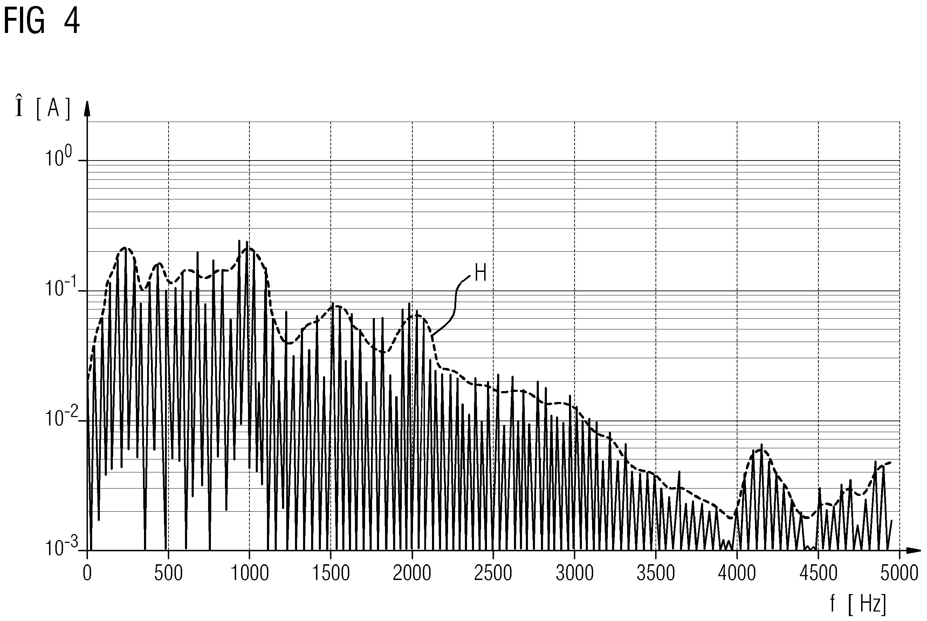

Figur 4 zeigt ein sich aus den in Figur 3 gezeigten zeitlichen Verläufen des Ausgangsstroms i und der Schaltfrequenz fₛ ergebendes erstes Amplitudenspektrum Î(f) einer Amplitude I des Ausgangsstroms i in Abhängigkeit von einer Frequenz f. Das Amplitudenspektrum Î(f) weist als Folge der zeitlichen Änderung der Schaltfrequenz fₛ eine Verteilung der Amplituden Î über einen großen Frequenzbereich auf, so dass eine geglättete Hüllkurve H des Amplitudenspektrums Î(f) über einen weiten Bereich keine Nullstelle aufweist.

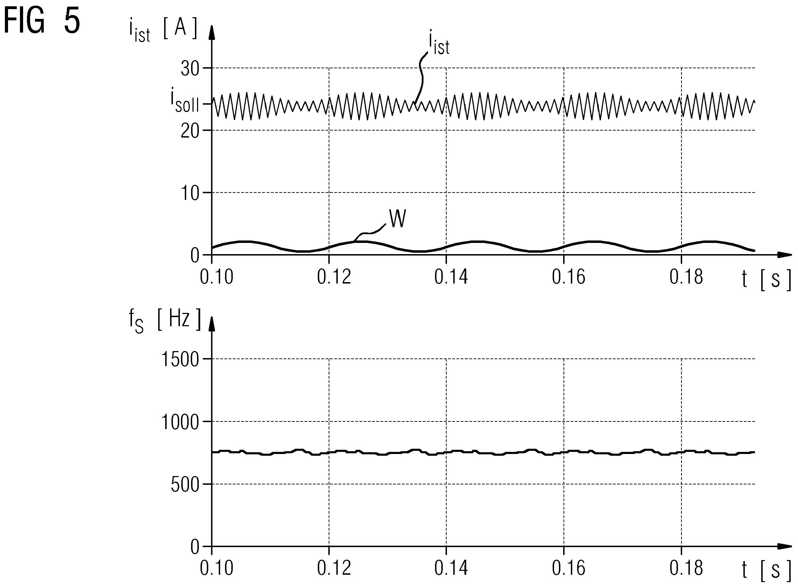

Figur 5 zeigt dritte zeitliche Verläufe eines Istwertes iᵢₛₜ des Ausgangsstroms i des in Figur 1 dargestellten Stromrichters 1 und der Schaltfrequenz fₛ des Schalters S für eine sinusförmige Gegenspannung U_{Qi} mit einer Frequenz von 50 Hz und einen konstanten Sollwert iₛₒₗₗ des Ausgangsstroms i von 25 A wie in Figur 3, wobei die Hysteresebreite W des Hysteresefensters moduliert wird, so dass sich eine nahezu konstante Schaltfrequenz fₛ des Schalters S von etwa 750 Hz ergibt.

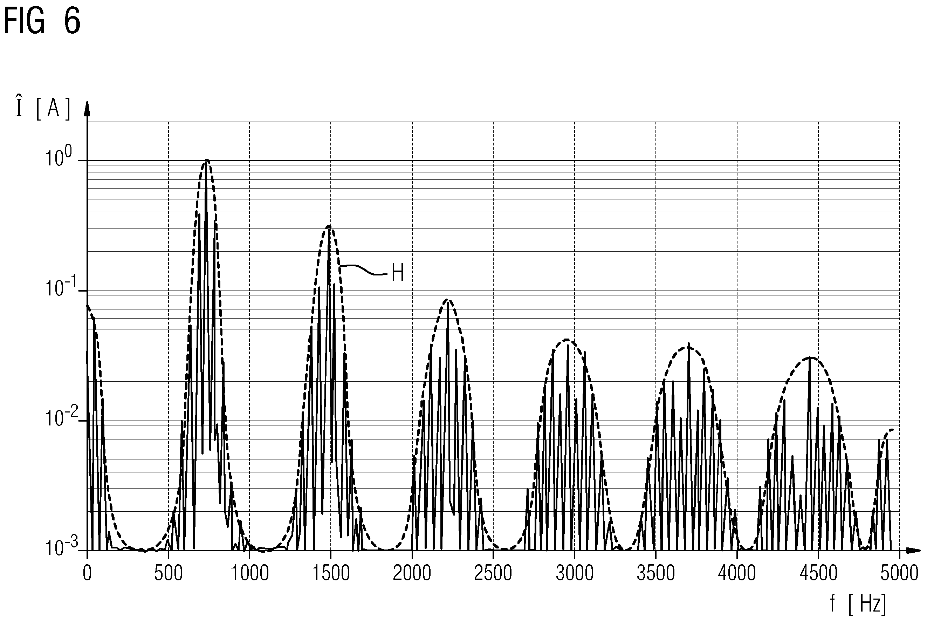

Figur 6 zeigt ein sich aus den in Figur 5 gezeigten zeitlichen Verläufen des Ausgangsstroms i und der Schaltfrequenz fₛ ergebendes zweites Amplitudenspektrum Î(f) der Amplitude Î des Ausgangsstroms i in Abhängigkeit von der Frequenz f. Im Unterschied zu dem in Figur 4 gezeigten ersten Amplitudenspektrum Î(f) weist das in Figur 6 gezeigte zweite Amplitudenspektrum Î(f) eine Konzentration der Amplituden Î auf schmale Frequenzbereiche auf, die jeweils um die nahezu konstante Schaltfrequenz fₛ des Schalters S von etwa 750 Hz oder ein Vielfaches dieser Schaltfrequenz fₛ angeordnet sind, so dass die geglättete Hüllkurve H des Amplitudenspektrums Î(f) zwischen diesen Frequenzbereichen auf Null sinkt. Dies zeigt, dass durch die Modulation der Hysteresebreite W des Hysteresefensters das Frequenzspektrum des Ausgangsstroms i des Stromrichters 1 beeinflusst und eingestellt werden kann. Insbesondere zeigt der Vergleich der in den Figuren 4 und 6 gezeigten Amplitudenspektren Î(f), dass durch eine geeignete Modulation der Hysteresebreite W des Hysteresefensters Oberschwingungsanteile des Ausgangsstroms i des Stromrichters 1 auf bestimmte Frequenzbereiche konzentriert werden können.

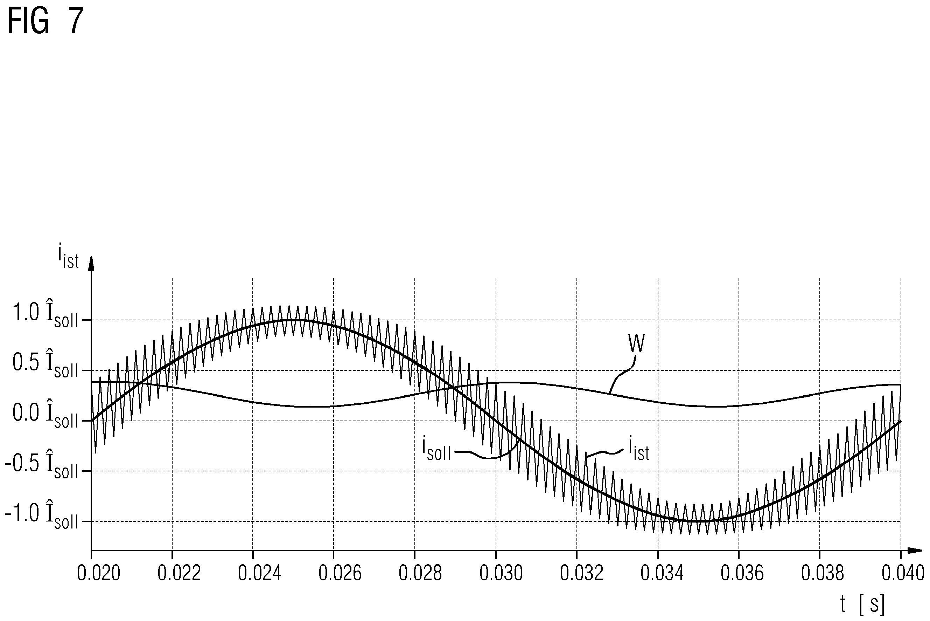

Figur 7 zeigt einen vierten zeitlichen Verlauf eines Istwertes iᵢₛₜ des Ausgangsstroms i des in Figur 1 dargestellten Stromrichters 1 für eine sinusförmige Gegenspannung U_{Qi} und einen sinusförmig mit einer Frequenz von 50 Hz und einer Sollamplitude Iₛₒₗₗ verlaufenden Sollwert iₛₒₗₗ des Ausgangsstroms i, wobei die Hysteresebreite W des Hysteresefensters sinusförmig mit einer Frequenz von 100 Hz moduliert wird, so dass die Minima der Hysteresebreite W zu Zeitpunkten angenommen werden, an denen der Sollwert iₛₒₗₗ des Ausgangsstroms i Extremwerte aufweist.

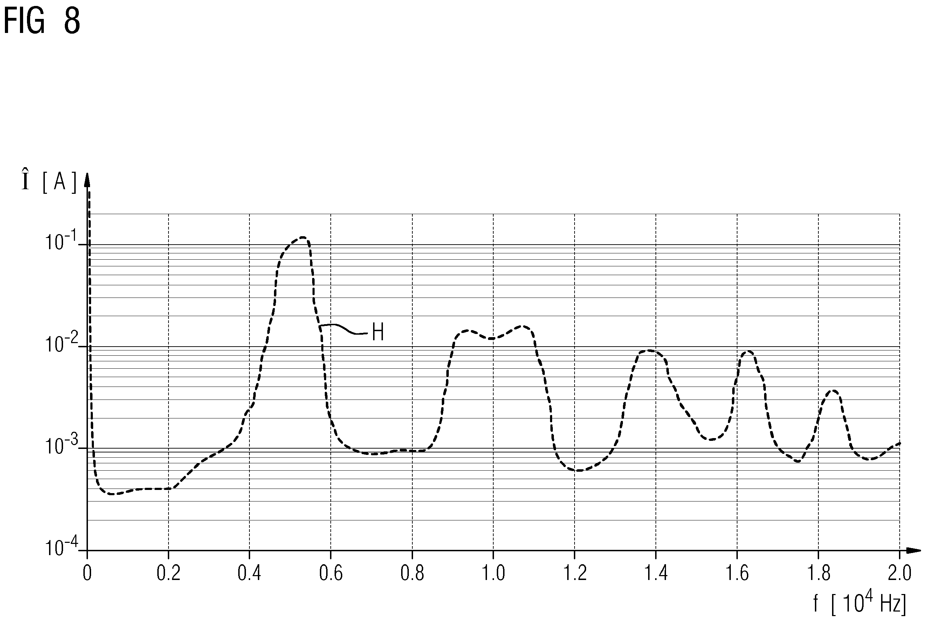

Figur 8 zeigt ein zu Figur 7 korrespondierendes drittes Amplitudenspektrum Î(f) der Amplitude Î des Ausgangsstroms i in Abhängigkeit von der Frequenz f, wobei nur die Hüllkurve H des Amplitudenspektrums Î(f) dargestellt ist. Durch die Modulation der Hysteresebreite W werden ähnlich wie in Figur 6 Oberschwingungsanteile des Ausgangsstroms i auf relativ schmale Frequenzbereiche konzentriert. Das Amplitudenspektrum Î(f) weist bei der Frequenz von 50 Hz des Sollwertes iₛₒₗₗ ein Maximum auf.

Die Figuren 9 und 10 zeigen ein zweites Ausführungsbeispiel eines Stromrichters 1. Dabei zeigt Figur 9 ein Ersatzschaltbild und Figur 10 zeigt einen Schaltplan des Stromrichters 1. Der Stromrichter 1 ist ein dreiphasiger Wechselrichter, der einen Gleichspannungszwischenkreis Z, für jede Phase einen Schalter S_{U}, S_{V}, S_{W} sowie einen Hystereseregler 5 und eine Modulationseinheit 7 aufweist.

Wie bei dem in Figur 1 gezeigten Ausführungsbeispiel weist der Gleichspannungszwischenkreis Z eine Niederpotentialschiene 9, die auf einem Niederpotential Z- liegt, und eine Hochpotentialschiene 11, die auf einem Hochpotential Z₊ liegt, auf und stellt eine Gleichspannung U_{z}, die die Differenz des Hochpotentials Z₊ und des Niederpotentials Z- ist, bereit.

Jeder Schalter S_{U}, S_{V}, S_{W} weist einen ersten Schaltzustand, der einen Ausgang des Schalters S_{U}, S_{V}, S_{W} auf das Hochpotential Z₊ legt, und einen zweiten Schaltzustand, der den Ausgang des Schalters S auf das Niederpotential Z- legt, auf und ist mit einer Anschlussklemme L1, L2, L3 der jeweiligen Phase des Stromrichters 1 verbunden. Jeder Schalter S_{U}, S_{V}, S_{W} wird durch zwei zu einer Halbbrücke 15 verschaltete Halbleiterschalter 17 gebildet. Jeder Halbleiterschalter 17 ist beispielsweise als ein Bipolartransistor mit isolierter Gate-Elektrode (IGBT = Insulated-Gate Bipolar Transistor) und einer antiparallel geschalteten Diode ausgeführt.

Mit dem Hystereseregler 5 werden die Ausgangsströme i_{U}, i_{V}, i_{W} der Phasen des Stromrichters 1 durch eine direkte Hysteresestromregelung geregelt. Als Hysteresestromregelung wird vorzugsweise eine SDHC-Stromregelung verwendet. Dazu werden die Ausgangsströme i_{U}, i_{V}, i_{W} des Stromrichters 1 mit einer Strommessvorrichtung 13 erfasst. Aus den erfassten Ausgangsströmen i_{U}, i_{V}, i_{W} wird von dem Hystereseregler 5 in einem statorfesten komplexen Koordinatensystem ein Iststromraumzeiger gebildet. Der Iststromraumzeiger wird durch Ansteuerung der Schalter S_{U}, S_{V}, S_{W} durch den Hystereseregler 5 innerhalb eines Hysteresefensters um einen Sollstromraumzeiger gehalten, wobei bei dem SDHC-Verfahren zu jedem Zeitpunkt vier benachbarte Spannungsraumzeiger verwendet werden, deren Spitzen eine Raute bilden, um die Ansteuerung der Schalter S_{U}, Sv, S_{W} zu bestimmen. Da der Iststromraumzeiger eine komplexe Größe ist, weist das Hysteresefenster jeweils eine Hysteresebreite W für den Realteil und für den Imaginärteil des Iststromraumzeigers auf.

Mit der Modulationseinheit 7 werden die Hysteresebreiten W für den Realteil und für den Imaginärteil des Iststromraumzeigers moduliert. Durch die Modulation dieser Hysteresebreiten W können die Frequenzspektren der Ausgangsströme i_{U}, i_{V}, i_{W} analog zu der oben anhand der Figuren 2 bis 8 beschriebenen Beeinflussung des Frequenzspektrums eines Ausgangsstroms i des in Figur 1 dargestellten Stromrichters 1 beeinflusst werden. Insbesondere können Oberschwingungsanteile der Frequenzspektren auf bestimmte Frequenzbereiche konzentriert werden.

Bei jedem der anhand der Figuren 1 bis 10 beschriebenen Ausführungsbeispiele der Erfindung wird die Modulation der Hysteresebreite W entweder für verschiedene Betriebspunkte des Stromrichters 1 vorausberechnet und im laufenden Betrieb des Stromrichters 1 betriebspunktabhängig gemäß der Vorausberechnung eingestellt, oder die Modulation der Hysteresebreite W wird im laufenden Betrieb des Stromrichters 1 in Abhängigkeit von einem momentanen Betriebspunkt des Stromrichters 1 berechnet, oder die Hysteresebreite W wird im laufenden Betrieb des Stromrichters 1 geregelt. Die Betriebspunkte des Stromrichters 1 werden dabei wenigstens durch den Ausgangsstrom i bzw. die Ausgangsströme i_{U}, i_{V}, i_{W} und/oder einen Aussteuergrad des Sollausgangsstroms bzw. der Sollausgangsströme bezogen auf die Gleichspannung U_{Z} definiert.

Die Erfindung kann statt für in den Figuren 1, 9 und 10 dargestellte Stromrichter 1 mit Zwei-Level-Topologie, deren Schalter S, S_{U}, S_{V}, S_{W} nur zwei Schaltzustände aufweisen, analog für Stromrichter 1 mit Multi-Level-Topologie, deren Schalter S, S_{U}, S_{V}, S_{W} mehr als nur zwei Schaltzustände aufweisen, ausgeführt werden. Ferner kann der Stromrichter 1 einen Neutralleiteranschluss aufweisen und/oder als ein Wechselrichter für eine von Eins und Drei abweichende Phasenanzahl ausgebildet sein.

Die Modulation der Hysteresebreite W eines Ausgangsstroms i, i_{U}, i_{V}, i_{W} eines Stromrichters 1 kann insbesondere vorteilhaft verwendet werden, um das Frequenzspektrum des Ausgangsstroms i, i_{U}, i_{V}, i_{W} an einen mit dem Stromrichter 1 verbundenen Netzfilter 19 anzupassen.

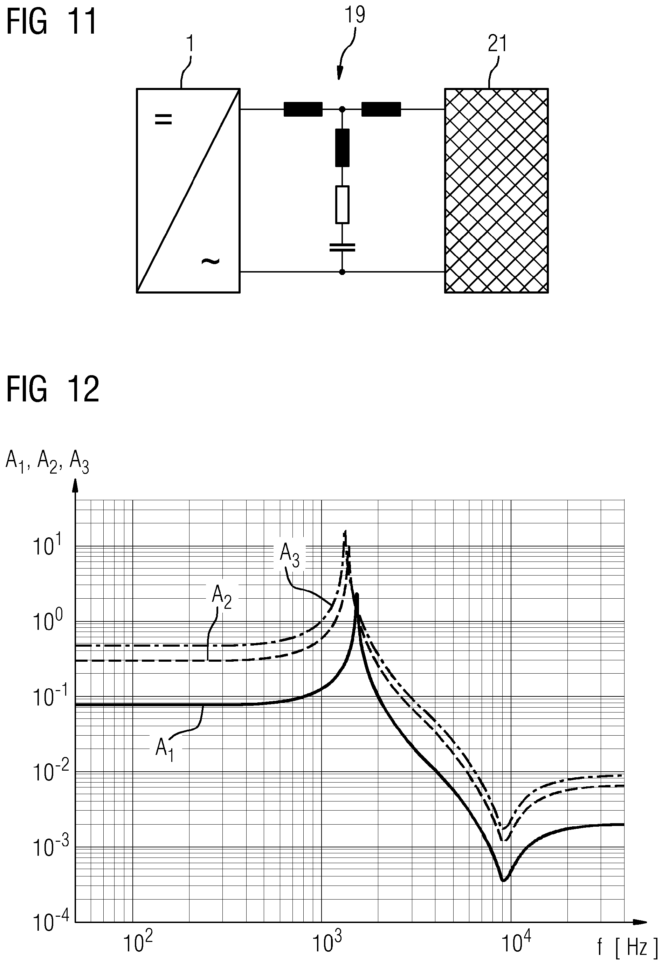

Figur 11 zeigt ein Blockschaltbild eines aus einem Stromrichter 1, einem Netzfilter 19 und einem Netz 21 bestehenden Systems. Der Stromrichter 1 ist ein Wechselrichter, der über den Netzfilter 19 an das Netz 21 angeschlossen ist. Der Netzfilter 19 ist beispielhaft als ein verdrosselter LCL-Filter mit Dämpfung ausgeführt.

Figur 12 zeigt Amplitudengänge A₁, A₂, A₃ des in Figur 11 dargestellten Netzfilters 19 für verschiedene Netzinduktivitäten an einem Verknüpfungspunkt des Netzes 21 mit dem Netzfilter 19. Die Amplitudengänge A₁, A₂, A₃ weisen jeweils ein ausgeprägtes Dämpfungsmaximum bei einer Auslegungsfrequenz von etwa 9 kHz auf. Die Verwendung von Stromrichtern 1 der oben anhand der Figuren 1 bis 10 beschriebenen Art mit direkten Hysteresestromregelungen und modulierbaren Hysteresebreiten W von Hysteresefenstern für die Ausgangsströme i, i_{U}, i_{V}, i_{W} der Stromrichter 1 ermöglicht vorteilhaft, durch eine Modulation der Hysteresebreiten W Oberschwingungsanteile der Frequenzspektren der Ausgangsströme i, i_{U}, i_{V}, i_{W} auf den Frequenzbereich um die Auslegungsfrequenz, bei der das Dämpfungsmaximum auftritt, zu konzentrieren. Dadurch können die Frequenzspektren vorteilhaft dem Netzfilter 19 angepasst werden. Insbesondere kann ein herkömmlicher Stromrichter 1 vorteilhaft durch einen Stromrichter 1 mit einer direkten Hysteresestromregelung unter Beibehaltung eines vorhandenen Netzfilters 19 ersetzt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Regelung eines Ausgangsstroms (i, i_{U}, i_{V}, i_{W}) eines Stromrichters (1), der einen Gleichspannungszwischenkreis (Z) und Halbleiterschalter (17) in einer Brückenschaltung zur Umrichtung einer Gleichspannung (U_{Z}) des Gleichspannungszwischenkreises (Z) aufweist, wobei
- der Ausgangsstrom (i, i_{U}, i_{V}, i_{W}) mit einer direkten Hysteresestromregelung geregelt wird, bei der ein Istwert (iᵢₛₜ) des Ausgangsstroms (i, i_{U}, i_{V}, i_{W}) innerhalb eines Hysteresefensters um einen Sollwert (iₛₒₗₗ gehalten wird,
- und eine Hysteresebreite (W) des Hysteresefensters moduliert wird, um ein Frequenzspektrum des Ausgangsstroms (i, i_{U}, i_{V}, i_{W}) einzustellen.

2. Verfahren nach Anspruch 1,
**dadurch gekennzeichnet, dass** die Modulation der Hysteresebreite (W) für verschiedene Betriebspunkte des Stromrichters (1) vorausberechnet wird und im laufenden Betrieb des Stromrichters (1) betriebspunktabhängig gemäß der Vorausberechnung eingestellt wird.

3. Verfahren nach Anspruch 1,
**dadurch gekennzeichnet, dass** die Modulation der Hysteresebreite (W) im laufenden Betrieb des Stromrichters (1) in Abhängigkeit von einem momentanen Betriebspunkt des Stromrichters (1) berechnet wird.

4. Verfahren nach Anspruch 1,
**dadurch gekennzeichnet, dass** die Hysteresebreite (W) im laufenden Betrieb des Stromrichters (1) geregelt wird.

5. Verfahren nach einem der vorhergehenden Ansprüche, wobei der Stromrichter (1) mit einem Netzfilter (19) verbunden ist, **dadurch gekennzeichnet, dass** die Hysteresebreite (W) in Abhängigkeit von einem Amplitudengang (A₁, A₂, A₃) des Netzfilters (19) moduliert wird.

6. Verfahren nach Anspruch 5,
**dadurch gekennzeichnet, dass** die Hysteresebreite (W) derart moduliert wird, dass ein Oberschwingungsanteil des Ausgangsstroms (i, i_{U}, i_{V}, i_{W}) von einem ersten Frequenzbereich in einen zweiten Frequenzbereich, in dem das Netzfilter (19) eine höhere Dämpfung als in dem ersten Frequenzbereich aufweist, verschoben wird.

7. Verfahren nach einem der vorhergehenden Ansprüche, **dadurch gekennzeichnet, dass** als Hysteresestromregelung eine SDHC-Stromregelung verwendet wird.

8. Stromrichter (1), aufweisend
- einen Gleichspannungszwischenkreis (Z) mit einer Hochpotentialschiene (11) und einer Niederpotentialschiene (9), zwischen denen eine Gleichspannung (U_{Z}) anliegt,
- Halbleiterschalter (17), die in einer Brückenschaltung zwischen die Hochpotentialschiene (11) und die Niederpotentialschiene (9) zur Umrichtung der Gleichspannung (U_{Z}) geschaltet sind,
- einen Hystereseregler (5) zur direkten Hysteresestromregelung eines Ausgangsstroms (i, i_{U}, i_{V}, i_{W}) des Stromrichters (1), bei der ein Istwert (iᵢₛₜ) des Ausgangsstroms (i, i_{U}, i_{V}, i_{W}) innerhalb eines Hysteresefensters um einen Sollwert (iₛₒₗₗ gehalten wird,
- und eine Modulationseinheit (7) zur Modulation einer Hysteresebreite (W) des Hysteresefensters.

9. Stromrichter (1) nach Anspruch 8,
**dadurch gekennzeichnet, dass** die Brückenschaltung eine Zwei-Level-Topologie oder eine Multi-Level-Topologie aufweist.

10. Stromrichter (1) nach Anspruch 8 oder 9,
**dadurch gekennzeichnet, dass** der Stromrichter (1) als ein einphasiger oder mehrphasiger Wechselrichter oder als ein Gleichspannungswandler ausgebildet ist.

11. Stromrichter (1) nach einem der Ansprüche 8 bis 10, **dadurch gekennzeichnet, dass** die Modulationseinheit (7) eine Steuereinheit zur Speicherung vorausberechneter betriebspunktabhängiger Modulationsmuster zur Modulation der Hysteresebreite (W) und zur Steuerung der Hysteresebreite (W) im laufenden Betrieb des Stromrichters (1) gemäß einem vorausberechneten betriebspunktabhängigen Modulationsmuster aufweist.

12. Stromrichter (1) nach einem der Ansprüche 8 bis 10, **dadurch gekennzeichnet, dass** die Modulationseinheit (7) eine Steuereinheit zur Berechnung der Modulation der Hysteresebreite (W) in Abhängigkeit von einem momentanen Betriebspunkt des Stromrichters (1) im laufenden Betrieb und zur Steuerung der Hysteresebreite (W) gemäß der berechneten Modulation aufweist.

13. Stromrichter (1) nach einem der Ansprüche 8 bis 10, **dadurch gekennzeichnet, dass** die Modulationseinheit (7) eine Regelungseinheit zur Regelung der Hysteresebreite (W) aufweist.
